# EUROPÄISCHE PATENTANMELDUNG

(11) **EP 0 557 775 A1**
(43) Veröffentlichungstag der Anmeldung: **01.09.1993**
(21) Anmeldenummer: 93101927.7
(22) Anmeldetag: 08.02.1993
(51) Int. Cl.: H02M 7/217, H05B 33/08

(54) **Anordnung mit einem an Wechselspannung anschliessbaren Gleichrichter**

(30) Priorität: 28.02.1992 DE 4206215
(71) Anmelder: EBT Licht-Technik GmbH, D-67098 Bad Dürkheim (DE)
(72) Erfinder: Klug, Georg, W-6702 Bad Dürkheim (DE); Schweitzer, Rainer, W-6702 Bad Dürkheim (DE)
(74) Vertreter: Klose, Hans, Dipl.-Phys.

(57) **Zusammenfassung**

Eine Anordnung zur Phasenanschnittsteuerung enthält einen an eine Wechselspannung anschließbaren Gleichrichter (3) sowie ein Halbleiterelement (14). Diese Anordnung soll dahingehend weitergebildet werden, daß sie ein geringes Bauvolumen aufweist und den direkten Anschluß eines Leuchtelements an Netzspannungen von 110 bis 250 V ermöglicht. Es wird vorgeschlagen, daß die Anordnung dem Leuchtelement (16), welches insbesondere als eine LED oder eine Multi-LED ausgebildet ist, vorgeschaltet ist, und daß das Leuchtelement (16) und eine diese Anordnung enthaltende Platine (42) oder dergleichen in einem Gehäuse (36) angeordnet sind, wobei das Leuchtelement (16) im Vorderteil (38) des Gehäuses (36) angeordnet ist.

## Beschreibung

Die Erfindung bezieht sich auf eine Anordnung zur Phasenanschnittsteuerung gemäß den im Oberbegriff des Patentanspruchs 1 angegebenen Merkmalen.

Aus dem US-Patent 4 685 046 ist eine derartige Anordnung zur Phasenanschnittsteuerung bekannt, welche von einer Netzspannung von beispielsweise 115 V AC bei 60 Hz eingespeist wird. Zur Umwandlung in Gleichspannung ist ein Brückengleichrichter vorgesehen, wobei die ungeglättete Wechselspannung Halbleiterelementen in Form von Transistoren und Dioden zugeführt wird. Ein mit einer Last in Reihe liegender Schalttransistor wird derart angesteuert, daß durch die Last nur dann ein Strom fließen kann, wenn die gleichgerichtete Wechselspannung einen vorgegebenen Schwellwert nicht überschreitet. Durch Glättung mittels eines Kondensators parallel zur Last wird eine vergleichsweise niedrige Spannung von beispielsweise 11,3 V DC an der Last erreicht. Sämtliche Bauteile müssen für die vergleichsweise große Eingangsspannung ausgelegt sein und insgesamt erfordert diese Schaltungsanordnung ein relativ großes Bauvolumen.

Ferner ist aus der DE 37 04 467 eine Kleinglühlampe bekannt, welche für den Betrieb an 220 V Wechselspannung ausgelegt ist. Als Kleinglühlampen werden regelmäßig solche Glühlampen bezeichnet, deren Durchmesser im wesentlichen im Bereich zwischen 7 und 20 mm liegt. Solche Kleinglühlampen enthalten regelmäßig Metallsockel in genormten Bauformen mit den Bezeichnungen BA7s, BA9s, B15d, E10, E14 oder in vergleichbarer Bauweise. Kleinglühlampen sind für Leistungen bis ca. 2,5 W ausgelegt, was bei 220 V etwa einen max. Strom von 12 mA entspricht. Da eine Kleinglühlampe einen sehr dünnen, als Wendel ausgebildeten Glühfaden enthält, weisen auch unter Einhaltung der Anforderungen für eine störungsfeste Auslegung solche Kleinglühlampen eine Lebensdauer von ca. 5000 Stunden auf. Kleinglühlampen mit den erwähnten Metallsockeln beispielsweise der Bauform E10 oder BA9s besitzen max. Abmessungen von 11 x 29 mm (Durchmesser x Länge), weisen durch Produktionsverfahren bedingte typische Merkmale auf und müssen den Normen, insbesondere VDE 0710, entsprechen. Ferner sind Fertigungsprobleme vor allem im Hinblick auf die sich in der Praxis ergebenden vergleichsweise kurzen Luft- und Kriechstrecken zu beachten, wobei oftmals ein Mindestabstand von 3 mm zwischen unter Spannung stehenden Teilen unterschiedlicher Polarität oftmals unterschritten wird. Dies hat zur Folge, daß für anliegende Spannungswerte von über 42 V Wechsel- oder Gleichspannung Kriechströme auftreten und Überschläge erfolgen können. Schließlich sei festgehalten, daß für den Betrieb derartiger Kleinglühlampen an 230 V Wechsel- oder Gleichspannung externe Vorschaltglieder, beispielsweise Widerstand, Kondensator oder ähnliches vorgesehen werden können, um die an der Kleinglühlampe anliegende Spannung auf die Größenordnung von 100 - 130 V zu reduzieren. Solche externen Schaltungen erfordern einen erheblichen Aufwand und bereiten oftmals Probleme aufgrund des erheblichen Bauvolumens hinsichtlich der Anordnung in Meßgeräten, Befehlszentralen oder dergleichen.

Als Ersatz von Kleinglühlampen oder Signallampen gelangen heute weitgehend Multi-LED's zum Einsatz, welche wenigstens zwei oder mehr lichtemittierende Dioden (LED) in Reihe oder parallelgeschaltet enthalten. Derartige Multi-LED zeichnen sich vor allem durch eine lange Lebensdauer in der Größenordnung von 100.000 Stunden aus, während Kleinglühlampen eine Lebensdauer von ca. 5.000 Stunden aufweisen. Auch die absolute Erschütterungsfestigkeit derartiger Multi-LED's oder Mehrfachleuchtdioden sowie deren niedrige Stromaufnahme und die hierdurch bedingte niedrige Wärmeentwicklung führen zu deren weiten Verbreitung. Mit Multi-LED's, welche integrierte Vorwiderstände oder Zenerdioden enthalten, können heute nur Spannungsbereiche zwischen 5 bis 60 V DC/AC abgedeckt werden. Noch höhere Spannungsbereiche erfordern infolge der erhöhten Leistungsaufnahme größere Bauteile, welche keinesfalls zusammen mit einer Multi-LED in einem Gehäuse untergebracht werden können. Es sei festgehalten, daß es sich insofern um Gehäuseabmessungen in der Größenordnung von 10 mm und einer Länge von ca. 15 mm bis 30 mm handelt. Daher war der Betrieb solcher Multi-LED's an Spannungen in den üblichen Bereichen von 110 bis 230 V nur in Verbindung mit externen Beschaltungen, wie z.B. mittels Widerständen oder Kondensatorschaltungen, möglich.

Hiervon ausgehend liegt der Erfindung die Aufgabe zugrunde, eine Anordnung vorzuschlagen, welche ein geringes Bauvolumen aufweist und wenige Bauteile erfordert. Die Schaltungsanordnung soll in ein Gehäuse und Sockel eines Leuchtelements, insbesondere einer LED-Anzeige zu integrieren sein und einen funktionssicheren Aufbau aufweisen.

Die Lösung dieser Aufgabe erfolgt nach den im kennzeichnenden Teil des Patentanspruchs 1 angegebenen Merkmalen.

Die erfindungsgemäße Anordnung zeichnet sich durch eine kompakte Bauweise aus und gewährleistet mit wenigen Bauteilen die Realisierung der Phasenanschnittsteuerung. Die elektronische Schaltung der Phasenanschnittsteuerung ist im Inneren eines Gehäuses angeordnet, an dessen vorderen Ende das Leuchtelement, welches insbesondere als eine LED oder als eine Multi-LED ausgebildet ist, angeordnet. Das Gehäuse besteht aus Kunststoff und ist im wesentlichen zylindrisch ausgebildet. Das Leuchtelement ist im vorderen Teil des Gehäuses befestigt, während die Schaltungsanordnung mit der Phasenanschnittsteuerung einen wesentlichen Teil des Innenraums des Gehäuses ausfüllt. Das Gehäuse bildet einen sicheren Schutz sowohl für das Leuchtelement als auch für die Schaltungsanordnung und bevorzugt wird durch das aus Kunststoff bestehende Gehäuse den Sicherheitsanforderungen entsprochen. Das Leuchtelement und die Elektronik sind funktionssicher in dem Gehäuse befestigt und gehaltert und insgesamt ist eine vorgefertigte Baugruppe geschaffen, welche problemlos in die erforderlichen genormten Sockel eingesetzt werden kann. Die vorgeschlagene Anordnung umfaßt das Kunststoffgehäuse, den Sockel, die in das Kunststoffgehäuse integrierte Vorschaltelektronik und die LED oder Multi-LED, so daß insgesamt mit integrierter Elektronik eine Austausch- oder Ersatzanordnung für herkömmliche Kleinglühlampen für direkten Anschluß an übliche Netzspannungen geschaffen ist.

Die Schaltungsanordnung kann zuverlässig in der SMD-Technik (surface mounted devices) realisiert werden. Des weiteren kann die erfindungsgemäße Schaltungsanordnung mittels konventionellen Halbleitern, als ASIC, als IC oder als Hybrid-Schaltkreis in Dickfilm oder Dünnfilmtechnik ausgebildet sein. Der direkte Anschluß an die Netzspannung ohne Transformator wird ermöglicht. Unabhängig von der jeweiligen konkreten Ausgestaltung ist die Schaltungsanordnung in gleicher Weise als Schaltnetzteil wie auch als Vorschaltglied für Leuchtelemente, insbesondere Leuchtdioden, LED-Anzeigen, Multi-LED's oder Glühlampen geeignet, wobei der direkte Einsatz in Spannungsbereichen von 110 bis 250 V AC ermöglicht wird. Ohne externe Beschaltung können Multi-LED's oder LED-Anzeigen an Netzspannung von 110 bis 250 V AC angeschlossen werden und ohne weiteres zum Austausch von vorhandenen Leuchtmitteln wie Glühlampen oder Glimmlampen eingesetzt werden.

Aufgrund der erheblich längeren Lebensdauer der Multi-LED oder LED-Anzeigen im Vergleich mit Glühlampen oder Glimmlampen wird eine nicht unerhebliche Kostenersparnis im Hinblick auf Austausch und Wartung erreicht. Durch geringere Leistungsaufnahme sowie geringe Wärmeentwicklung im Vergleich zu einer Glühlampe ergeben sich weitere Kostenvorteile. Schließlich sei ausdrücklich hervorgehoben, daß durch die erfindungsgemäße Multi-LED oder LED mit integriertem Vorschaltglied kein Helligkeitsverlust gegeben ist und somit die funktionssichere Beleuchtung von Tasten, Meldeleuchten oder sonstigen Anzeigeflächen mit geringem Bauaufwand und mit hoher Funktionssicherheit für eine lange Lebensdauer gewährleistet wird. Die Schaltung kann auf einer Platine mit Abmessungen in der Größenordnung 8,3 x 14 mm oder kleiner erfindungsgemäß angeordnet werden. Zweckmäßig werden die Vorderseite und Rückseite der Platine bestückt, wodurch eine optimale Platzausnutzung, insbesondere bei Anordnung im wesentlichen in einer Axialebene des zylindrischen Gehäuses, erreicht wird. Die vorgeschlagene LED- oder Multi-LED-Anordnung ist erfindungsgemäß der Ersatz für Kleinglühlampen bei direktem Netzanschluß und integrierter Vorschaltelektronik.

Weiterbildungen und besondere Ausgestaltungen der Erfindung sind in den Unteransprüchen angegeben.

Nachfolgend wird die Erfindung anhand eines besonderen Ausführungsbeispiels näher beschrieben. Es zeigen:
- Fig. 1: ein Schaltbild der Anordnung,
- Fig. 2, 3: axiale Längsschnitte in gegeneinander um 90° gedrehten Schnittebenen durch eine Multi-LED-Anzeige,
- Fig. 4: einen Schnitt entlang Schnittlinie IV in Fig. 1.

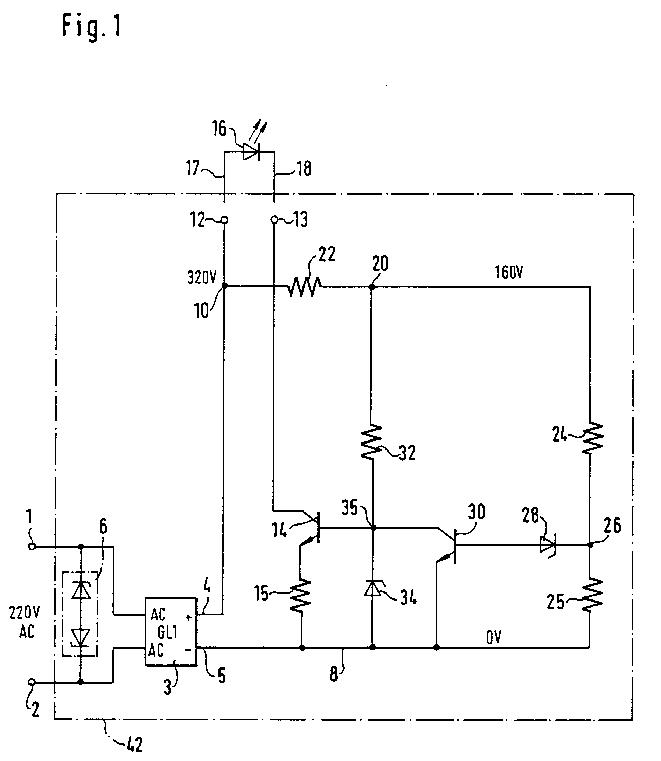

Die in Fig. 1 dargestellte Schaltung kann auf einer Platine 42 aufgebaut sein, welche sehr kleine Abmessungen in der Größenordnung von insbesondere 8,3 x 14 mm aufweist. Es sind zwei Eingänge 1, 2 zum direkten Anschluß an Wechselspannung von 220 V vorhanden. Ein Transformator ist erfindungsgemäß nicht erforderlich. Zum Schutz gegen Überspannungsimpulse ist der Schaltung eine Transildiode 6 vorgeschaltet. Bezogen auf einen Null-Leiter 8 liefert der Brückengleichrichter 3 an seinen Ausgängen 4, 5 eine pulsierende Spannung, deren Amplitude am Punkt 10 auf den Maximalwert von 320 V im Falle einer Eingangsspannung von 220 V ansteigt. Es sind zwei Anschlüsse 12, 13 vorhanden, wobei der Anschluß 12 mit dem genannten Punkt 10 verbunden ist. Der Anschluß 13 ist hingegen über einen Transistor 14 und einen Widerstand 15 auf den Null-Leiter 8 geführt. Der Transistor 14 ist insbesondere als ein Feldeffekttransistor ausgebildet. An die beiden Anschlüsse 12, 13 ist ein Leuchtelement 16 in Form einer Multi-LED angeschlossen. Weist eine LED eine Flußspannung von beispielsweise 16 V DC auf, so wird bei einer Multi-LED eine gemäß der LED-Anzahl erhöhte Spannung an Anschlüssen 12, 13 bereitgestellt. Im Rahmen der Erfindung ist wenigstens eine LED vorhanden, wobei bedarfsweise mehrere LED parallel oder seriell verknüpft, insbesondere als Multi-LED vorgesehen sind.

Ein zweiter Punkt 20 steht mit dem ersten Punkt 10 über einen Widerstand 22 in Verbindung, welcher hier einen Wert von 200 K Ohm aufweist. Durch diesen gemeinsamen Widerstand 22 wird für den nachfolgend noch zu erläuternden Schaltungsteil die anliegende Spannung gegenüber der am Punkt 10 anstehenden Spannung wesentlich reduziert, und zwar zweckmäßig in die Größenordnung der Hälfte der am Punkt 10 liegenden Spannung. Erreicht die am Punkt 10 anliegende pulsierende gleichgerichtete Spannung beispielsweise einen Maximalwert von 320 V, so wird aufgrund des nachgeschalteten gemeinsamen Widerstandes 22 die Spannung am Punkt 20 im wesentlichen auf 160 V halbiert. Hierdurch wird der Aufwand und vor allem das Bauvolumen der Schaltungsteile, welche zum Ansteuern des in zweckmäßiger Weise als Feldefekttransistor ausgebildeten Transistor 14 vorgesehen und auf ein Minimum reduziert. Die nachgestalteten Elektronikbauteile müssen nicht für die hohe max. Spannung ausgelegt werden, sondern nur auf einen erheblich reduzierten Anteil desselben. An den Punkt 20 ist ein Spannungsteiler mit zwei Widerständen 24, 25, mit Werten von 300 K Ohm bzw. 91 K Ohm angeschlossen, deren Verbindungspunkt 26 über eine Zenerdiode 28 auf die Basis eines Vorschalttransistors 30 geführt ist. Des weiteren ist der zweite Punkt 20 über einen Widerstand 30 von 300 K Ohm sowie eine weitere Zenerdiode 34 auf den Null-Leiter 8 geführt. Der gemeinsame Punkt 35 zwischen dem Widerstand 32 und der Kathode der Zenerdiode 34 ist einerseits mit der Basis des Transistors 14 und andererseits mit dem Kollektor des Vorschalttransistors 30 verbunden. Aufgrund der Zenerdiode 34 liegt der Punkt 35 bei gesperrtem Transistor 30 auf 10 Volt. Der Transistor 14 ist als ein Feldeffekttransistor vom Typ ZVN0545A/BS3934 ausgebildet, während der Transistor 30 vom Typ BC847C ist. Mit einem minimalen Bauaufwand wird der Einsatz von Bauteilen mit geringen Abmessungen und letztlich der Einbau in das Gehäuse einer Anzeige ermöglicht.

Die Schaltung wird in bevorzugter Weise mit Bauteilen der angegebenen Typenbezeichnung bzw. Werte realisiert, doch kann im Rahmen der Erfindung diese Schaltung auch mit anderen vergleichbaren Komponenten dimensioniert sein, und insbesondere für eine andere Eingangsspannung, bevorzugt 110 V Wechselspannung ausgelegt sein. Sie bewirkt eine selbstgetaktete Phasenanschnittsteuerung und stellt ein Schaltnetzteil dar, welches sowohl für die erläuterten LED als auch für andere Einsatzzwecke verwendet und in entsprechender Weise dimensioniert werden kann.

Nachfolgend soll die Funktionsweise erläutert werden. Geht man einmal vom Nullpunkt der pulsierenden Gleichspannung an Punkt 10 aus, so wird mit ansteigender Spannung der Feldefekttransistor 14 leitend. An den Anschlüssen 12, 13 und somit der Multi-LED 16 liegt somit Spannung und es fließt folglich ein weitgehend konstanter Strom, welcher beispielsweise 90 mA groß ist. Der Transistor 30 ist zunächst noch nicht leitend. Steigt die Spannung am Punkt 10 weiter an und erreicht einen vorgegebenen Wert, so wird infolge des Spannungsteilers aus den Widerständen 22, 32 und 24, 25 der Tranistor 30 leitend. Der Spannungsteiler und der Transistor 30 sind bei einer bevorzugten Ausgestaltung derart aufeinander abgestimmt und dimensioniert, daß bei einer Spannung von 94 V am Punkt 10 der Transistor 30 durchschaltet. Hierdurch wird der Punkt 35 und somit die Basis des Transistors 14 auf Masse gelegt, mit Folge, daß der Transistor 14 sperrt und durch die LED 16 kein Strom mehr fließen kann. Die am Punkt 10 anstehende Spannung steigt in der Folge bis zu ihrem Höchstwert von 320 V an und gelangt wieder zu der genannten Schaltschwelle von 94 V. Der Spannungsabfall am Widersand 25 wird dann so gering, daß er nicht mehr zum Durchsteuern des Transistors 30 ausreicht, welcher wiederum sperrt. Folglich wird der Transistor 14 wieder angesteuert und an den Anschlüssen 12, 13 und somit der Mulit-LED 18 liegt wieder Spannung an, welche den konstanten Strom von ca. 90 mA bewirkt. Entscheidend ist somit, daß der Transistor 14 solange leitend ist wie die an den Ausgängen 4,5 anstehende Spannung einen vorgegebenen Grenzwert unterschreitet, während erfindungsgemäß nach dem Überschreiten des vorgegebenen Grenzwertes der Transistor 14 gesperrt ist.

Die Multi-LED 16 oder allgemein ein an den Anschlüssen 12, 13 angeschlossener Verbraucher und/oder ein Leuchtelement werden periodisch an Spannung gelegt und beim Überschreiten eines vorgegebenen Grenzwertes abgeschaltet bzw. beim Unterschreiten wieder eingeschaltet. Dem Leuchtelement 16 werden somit Stromimpulse definierter Größe zugeführt und ihre Lichtausbeute gesteigert, ohne daß eine Zerstörmung infolge durch Wärmewirkung oder Leistungsverlust zu befürchten ist.

Von besonderer Bedeutung ist die Leistungsreduzierung bei einer Erhöhung der an den Eingängen 1, 2 anstehenden Spannung. Gelangen beispielsweise infolge von Störungen der Netzversorgung an die Eingänge 1, 2 wesentlich erhöhte Spannungsspitzen oder dauerhaft erhöhte Spanungswerte von beispielsweise 250 V anstelle von 220 V Wechselspannung, so wird am Punkt 10 der vorgegebene Grenzwert zeitlich früher erreicht, und die Stromflußdauer ist somit kürzer. Entsprechend wird nach dem Überschreiten des Maximums der vorgegebene Grenzwert zeitlich später erreicht und bis zum Erreichen des Null-Wertes der Spannung wird eine kürzere Zeitdauer benötigt, so daß widerum die Stromflußdauer kürzer ist. Das Verhältnis der Strominpulse zur Phasendauer wird kleiner und die Leistungsaufnahme geringer und eine Gefährdung oder gar Zerstörung infolge von Überspannungen wird mit Sicherheit unterbunden. Diese besonderne Vorteile kommen gleichermaßen auch bei anderen Einsatzzwecken zum Tragen, und zwar vor allem bei Verwendung als selbstgetaktetes Netzteil.

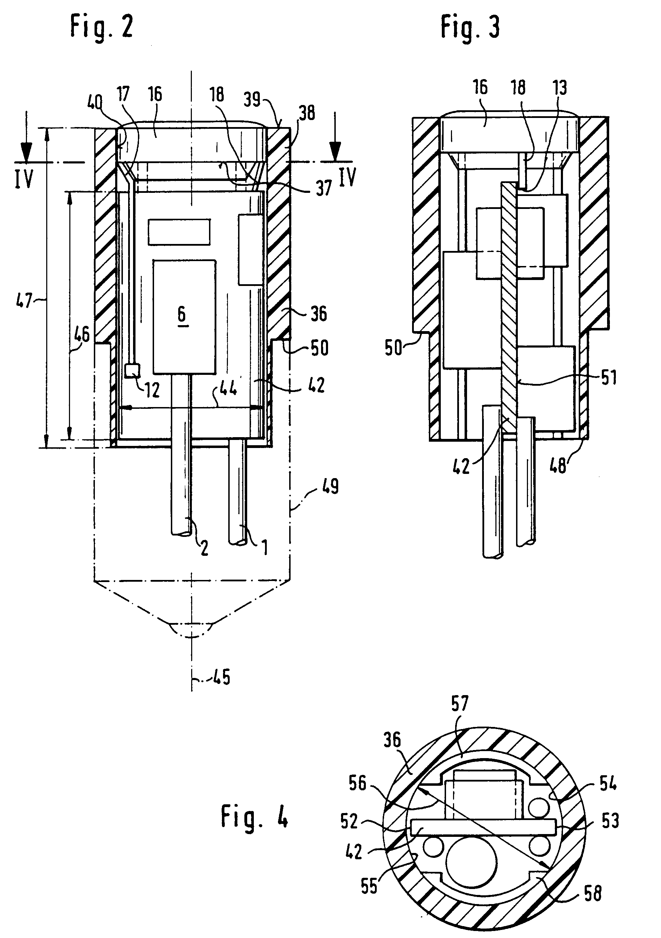

Fig. 2 zeigt als eine erfindungswesentliche Ausbildung in einem axialen Längsschnitt eine LED-Anzeige mit der Multi-LED 16, welche in ein Kunststoffgehäuse 36 eingesetzt ist. Die Multi-LED liegt mit ihrer Rückseite 37, und zwar insbesondere mit dem äußeren Rand an zugeordneten axialen Stirnflächen an, welche im inneren des Gehäuses 36 an Absätzen, radial nach innen gerichteten Vorsprüngen oder dergleichen vorgesehen sind. Eine sichere Abstützung und Befestigung der LED 16 im vorderen Ende des Gehäuses 36 wird hierdurch gewährleistet. Das Gehäuse 36 ist als Kunststoffspritzteil ausgebildet und weist im vorderen Endteil 38 eine im wesentlichen zylindrische Innenfläche 40 auf. In diesem Vorderteil 38 ist die außen gleichfalls zylindrische Multi-LED eingesetzt und bevorzugt dicht verbunden. Die LED 16 ist vorn im wesentlichen bündig mit der Vorderkante 39 des Gehäuses 36 und ragt mit ihrer gewölbten Frontfläche nur geringfügig aus dem Gehäuse 36 heraus. Die Multi-LED 16 ist somit funktionssicher gegen äußere Einwirkungen geschützt.

In das Gehäuse 36 ist ferner eine Platine 42 mit der erläuterten Schaltung zur Phasenanschnittsteuerung integriert. Diese Platine 42 weist eine Breite 44 von 8,3 mm und eine Höhe 46 von 14 mm auf. Die Breite 44 entspricht bevorzugt im wesentlichen dem Innendurchmesser des Gehäuses 36. Die Höhe 46 ist erfindungsgemäß wesentlich größer als die halbe axiale Länge 47 des Gehäuses 36 und beträgt bevorzugt im wesentlichen 3/4 der axialen Länge. Auf dieser Platine ist die oben erläuterte, miniaturisierte Schaltungsanordnung angeordnet, deren als Anschlußdrähte ausgebildete Eingänge 1, 2, zu sehen sind. Die Schaltungsanordnung ist sowohl auf der hier zu erkennenden Vorderseite der Platine 42 als auch auf deren Rückseite angeordnet. Die Platine 42 ist im wesentlichen in einer von der Längsachse 45 des Gehäuses 36 durchdrungenen Axialebene angeordnet. Die einzelnen Komponenten der Schaltung sind nur schematisch angedeutet, wobei beispielsweise auf die Transildiode 6 verwiesen sei. Ferner ist der Anschlußleiter 17 der Multi-LED 16 und die Verbindung mit dem Anschluß 12 dargestellt, während der andere Anschlußleiter 18 auf der Rückseite mit der Platine 42 verbunden ist.

Das Gehäuse 36 mit integrierter Multi-LED 16 und gleichfalls integrierter Schaltungsanordnung kann mit ihrem hinteren Endteil 48 in eine hier mit gestrichelten Linien angedeutete Hülse 49 eingesetzt werden. Das hintere Enddteil 48 des Gehäuses 36 weist in besonders zweckmäßiger Weise eine geringere Wanddicke auf als das vordere Teil des Gehäuses 36 und an der derart gebildeten Stufe 50 des Gehäuses liegt die Hülse 49 mit ihrer Stirnfläche an. Die Schaltungsanordnung und/oder die Platine 42 erstreckt sich nahezu bis zum hinteren Ende des Endteils 48 und der Innenraum der Hülse bzw. des Sockels 49 wird in der dargestellten Weise zur Aufnahme eines erheblichen Teils der Platine genutzt. Im Bereich des Endteils 48, umgibt somit der Sockel 49 sowohl den Endteil 48 als auch den innerhalb angeordneten Teil der Schaltungsanordnung oder der Platine 42. Diese Hülse ist zweckmäßig als Sockel ausgebildet, welcher die üblichen Abmessungen von Kleinglühlampen aufweist, so daß problemlos eine derart aufgebaute Multi-LED-Anzeige mit Sockel und integrierter Schaltung gegen eine handelsübliche Glühlampe bzw. Kleinglühlampe ausgetauscht werden kann. Die für die Versorgung vorgesehenen Eingänge 1, 2 bzw. die entsprechenden Anschlußdrähte sind wie bei den Glühlampen mit dem Metallsockel bzw. dem Mittelkontakt am Sockelende verbunden.

Fig. 3 zeigt die LED-Anzeige gleichfalls im Längsschnitt, jedoch mit einer bezüglich der Längsachse um 90° gedrehten Position. Hier ist unter anderem auch die Verbindung des Anschlußleiters 18 der Multi-LED 16 mit der Platine 42 zu erkennen. Das Gehäuse 36 weist ein hinteres Endteil 48 mit einer geringeren Wanddicke auf als im vorderen Teil. Auch die auf der Rückseite 51 der Platine 42 angeordneten Bauteile der elektronischen Anordnung und gut zu erkennen. Da die Platine 42 in der Mitte des Gehäuses in deren Axialebene angeordnet ist und die Bauteile sowohl auf der Rückseite als auch auf der Vorderseite der Patine 42 angeordnet sind, wird bei optimaler Ausnutzung des sehr kleinen Innenraumes des Gehäuses 36 die Integration der Schaltungsanordnung ermöglicht.

Fig. 4 zeigt einen Schnitt quer zur Längsachse, wobei die Multi-LED nicht dargestellt ist. Es ist hier gut die auf beiden Seiten mit den elektronischen Komponenten versehene Platine 42 zu erkennen. Die Platine 42 ist in der Mitte des aus Kunststoff bestehenden Gehäuses 36 angeordnet, und zwar im wesentlichen in einer Axialebene. Das Gehäuse 36 enthält im Bereich der Längskanten 52, 53 der Platine 42 radialen Erweiterungen 54, 55. Die Breite 44 der Platine 42 entspricht praktisch dem Innendurchmesser 56 des Gehäuses 36, welches einerseits die hinreichende Stabilität und andererseits aber auch im inneren hinreichend Bauvolumen für die Platine mit der Schaltung zur Phasenanschnittsteuerung aufweist. Im Bereich der Schnittebene weist das Gehäuse 36 radial innenliegende axiale Stirnflächen 57, 58 auf. Diese Stirnflächen 57, 58 gehören zu radial nach innen gerichteten Vorsprüngen im Inneren des Gehäuses 36 und bilden die Anlage für das Leuchtelement, das insbesondere als Multi-LED ausgebildet ist. Eine stabile und funktinsgerechte Abstützung und Auflagerung für das Leuchtelement ist somit geschaffen und eine Gefährdung der in das Gehäuse 36 mitintegrierten Schaltungsanordnung wird vermieden.

### Bezugszeichen

- 1, 2: Eingang
- 3: Brückengleichrichter
- 4, 5: Ausgang
- 6: Transildiode
- 8: Null-Leiter
- 10: erster Punkt
- 12, 13: Anschluß
- 14: Transistor, Typ ZVN0545A/BS3934
- 15: Widerstand
- 16: Multi-LED
- 17, 18: Anschlußleiter
- 20: zweiter Punkt
- 22, 24, 25: Widerstand
- 26: Verbindungspunkt
- 28: Zenerdiode
- 30: Vorschalttransistor, Typ BC847C
- 32: Widerstand
- 34: Zenerdiode
- 35: Punkt
- 36: Gehäuse
- 37: Rückseite
- 38: Vorderteil
- 39: Vorderkante von 36
- 40: zylindrische Innenfläche
- 41: Frontfläche von 16
- 42: Platine
- 44: Breite
- 45: Längsachse
- 46: Höhe
- 47: Länge von 36
- 48: Endteil
- 49: Hülse, Sockel
- 50: Stufe
- 52, 53: Längskante
- 54, 55: Erweiterung
- 56: Innendurchmesser
- 57, 58: Stirnfläche

## Patentansprüche

1. Anordnung zur Phasenanschnittsteuerung enthaltend einen an eine Wechselspannung anschließbaren Gleichrichter (32) sowie ein Halbleiterelement (14),
dadurch gekennzeichnet, daß sie einem Leuchtelement (16), welches insbesondere als eine LED oder eine Multi-LED ausgebildet ist, vorgeschaltet ist,
und daß das Leuchtelement (16) und eine die Anordnung enthaltende Platine (42) oder dergleichen in einem Gehäuse (36) angeordnet sind, wobei das Leuchtelement (16) im Vorderteil (38) des Gehäuses (36) angeordnet ist.

2. Anordnung nach Anspruch 1, dadurch gekennzeichnet, daß das Leuchtelement (16) das Gehäuse (36) an dessen Vorderteil (38) abschließt und/oder daß das Gehäuse (36) im wesentlichen zylindrisch ausgebildet ist.

3. Anordnung nach Anspruch 1 oder 2, dadurch gekennzeichnet, daß das Gehäuse (36) mit einem Endteil (48) in eine Hülse (49), welche insbesondere als Metall-Lampensockel ausgebildet ist, eingesetzt ist und/oder daß der Außendurchmesser des Gehäuses (36) im wesentlichen gleich groß ist wie der Außendurchmesser der Hülse (49), wobei der Außendurchmesser des Endteils (48) bevorzugt kleiner ausgebildet ist als der der im wesentlichen zylindrischen Außenfläche des Gehäuses (36).

4. Anordnung nach einem der Ansprüche 1 bis 3, dadurch gekennzeichnet, daß die Platine (42) im wesentlichen in einer Axialebene des Gehäuses (36) angeordnet ist und daß elektronische Bauteile der Schaltungsanordnung auf der Vorder- und auf der Rückseite der Platine (42) angeordnet sind.

5. Anordnung, insbesondere nach einem der Ansprüche 1 bis 4, dadurch gekennzeichnet, daß aus dem hinteren Endteil des Gehäuses (36) Eingangsleitungen (1, 2) herausgeführt sind, welche einerseits mit Kontakten des Sockels (49) verbunden sind und welche andererseits auf die Platine (42) geführt sind, und/ oder daß Anschlußleiter (17, 18) des Leuchtelements (16) direkt von der Vorderseite her auf die Platine (42) geführt und mit dort vorgesehenen Anschlüssen (12, 13) verbunden sind.

6. Anordnung nach einem der Ansprüche 1 bis 5, dadurch gekennzeichnet, daß die Anschlüsse (12, 13) in Reihe mit der Kollektor-Emitter-Strecke des Transistors (14) liegen, wobei der Emitter über einen Widerstand (15) mit dem auf dem Gleichrichter (3) geführten Null-Leiter (8) verbunden ist, und/oder daß die Basis des Transistors (14) einerseits über eine Zenerdiode (34) mit dem Null-Leiter (8) und andererseits über einen Spannungsteiler enthaltend Widerstände (32, 22) mit dem anderen Ausgang (4) des Gleichrichters (3) verbunden ist.

7. Anordnung nach Anspruch 1 bis 6, dadurch gekennzeichnet, daß dem Transistor (14) ein Vorschalttransistor (30) vorgeschaltet ist, dessen Basis über einen Widerstand (25) mit dem Null-Leiter (8) verbunden ist, wobei dieser Widerstand (25) mit zwei weiteren Widerständen (24, 22) einen Spannungsteiler bildet und mittels den genannten Widerständen der genannte Grenzwert vorgebbar ist.

8. Anordnung nach einem der Ansprüche 1 bis 7, dadurch gekennzeichnet, daß die Basis des Transistors (14) und der Kollektor des Vorschalttransistors (30) miteinander verbunden sind und/oder daß die Basis des Transistors (14) über eine Zenerdiode (34) mit dem Null-Leiter (8) verbunden ist, wobei mittels der Zenerdiode (34) die Basis des Transistors (14) auf einer vorgegebenen Spannung gehalten wird, solange der Vorschalttransistor (30) sperrt.

9. Anordnung, insbesondere nach einem der Ansprüche 1 bis 8, dadurch gekennzeichnet, daß das Leuchtelement (16) im vorderen Teil des im wesentlichen zylindrischen Gehäuses (36) angeordnet ist, welches bevorzugt mit seiner im wesentlichen zylindrischen Außenfläche an der entsprechenden Innenfläche des Gehäuses (36) anliegt.

10. Anordnung nach einem der Ansprüche 1 bis 9, dadurch gekennzeichnet, daß das Gehäuse (36) aus Kunststoff besteht und insbesondere als ein Kunststoffspritzteil ausgebildet ist und/oder daß das Gehäuse (36) im Bereich des Vorderteils (38) axiale Stirnflächen (57, 58) aufweist, an welchen das Leuchtelement (16) mit seiner der Platine (42) zugekehrten Rückseite teilweise, und zwar bevorzugt mit seinem äußeren Rand, anliegt.

11. Anordnung, insbesondere nach einem der Ansprüche 1 bis 10, dadurch gekennzeichnet, daß die Platine (42) zur Aufnahme der genannten elektronischen Bauteile, und zwar insbesondere der Transistoren (14, 30), der Widerstände (15, 22, 24, 25, 32) sowie der Zenerdioden (28, 34) vorgesehen ist und/oder in das Gehäuse (36) integriert ist.

12. Anordnung nach einem der Ansprüche 1 bis 12, dadurch gekennzeichnet, daß die Platine (42) eine Breite (44) von einem wesentlichen 8,3 mm sowie eine Höhe (46) von im wesentlichen 14 mm oder kleiner aufweist.
